(19) Europäisches Patentamt
European Patent Office
Office européen des brevets

(11) **EP 1 873 518 A2**

(12) **EUROPEAN PATENT APPLICATION**

(43) Date of publication:
**02.01.2008 Bulletin 2008/01**

(51) Int Cl.:
*G01N 27/447* (2006.01)  *F04B 17/00* (2006.01)
*F04B 19/00* (2006.01)  *B01L 3/00* (2006.01)
*B01L 3/00* (2006.01)

(21) Application number: **07018576.4**

(22) Date of filing: **30.04.2003**

(84) Designated Contracting States:
**AT BE BG CH CY CZ DE DK EE ES FI FR GB GR HU IE IT LI LU MC NL PT RO SE SI SK TR**

(30) Priority: **01.05.2002 US 137215**

(62) Document number(s) of the earlier application(s) in accordance with Art. 76 EPC:
**03724325.0 / 1 499 806**

(71) Applicant: **Eksigent Technologies, LLC**
**Dublin, CA 94568 (US)**

(72) Inventors:
• **Paul, Phillip H.**
**Livermore, CA 94550 (US)**

• **Neyer, David**
**Castro Valley, CA 94546 (US)**

(74) Representative: **Hirsz, Christopher Stanislaw et al**
**HLBBshaw**
**Merlin House**
**Falconry Court**
**Baker's Lane**
**Epping Essex CM16 5DQ (GB)**

Remarks:
This application was filed on 21 - 09 - 2007 as a divisional application to the application mentioned under INID code 62.

(54) **Electroosmotic flow systems**

(57) Electroosmotic flow systems containing two or more electroosmotic flow (EOF) elements (1,2) which meet at a junction (9), at least one of the electroosmotic flow elements having a substantial charge ratio. The electroosmotic flow elements have matching flux ratios. The electroosmotic flow elements may contain porous materials (14,24) whose terminal portions (12,21,22) are shaped to increase the surface area exposed to the fluid (4) at the junction.

The charge ratio on an EOF element is the weighted-volume equivalent concentration of surface charge divided by the ionic strength concentration of the bulk liquid. It is a measure of the extent to which the EOF element contain surfaces having a net charge. Flux ratio is the ionized species solute displacement flux per unit current flux through an EOF element. The flux ratio for any individual EOF element can be obtained by appropriate calculation and observation.

FIG.4

EP 1 873 518 A2

## Description

RELATED APPLICATION DATA

This application is a continuation-in-part of our Application Serial No. 10/137,215, filed May 1, 2002 (Docket No. 14129).

FIELD OF THE INVENTION

This invention relates to electrochemical systems.

BACKGROUND OF THE INVENTION

In electroosmotic flow systems (hereinafter referred to as EOF systems), an electric field is applied to a liquid containing ions and causes the liquid to flow. In many electrochemical systems, including EOF systems, bridges are used to physically separate, but ionically connect, different parts of the system, e.g. to isolate electrodes and electrode by-products from a working liquid. Such bridges are disclosed in, for example, U.S. Patent No. 3,923,426 (Theeuwes); Electrochemical detection for capillary electrophoresis (Doctoral dissertation, B.S.Seoul, U. Kansas, 1996, pp.136-141; Electrophoresis, 20, 525-528 (1999) Desiderio et al.; Micro Total Analysis Systems 2000, A. van den Berg Ed. (Kluwer Academic, Dordrecht, The Netherlands, 2000) pp. 213-216 (Ramsey et al.), pp.583-590 (Paul et al.) and pp. 355-358 (Wallenborg et al); Talanta 51, pp.667-675 (2000), Gan et al, which references Chinese Patent ZL 97212126.9 (1998); U.S. Patent No. 6,012,902 (Parce); W099/16162 (Parce); Chem. Eng. Commun., 38, pp. 93-106 (1985), Anderson et al; and US Patent No. 5,573,651 (Dasgupta et al).

EOF systems generally contain one or more electroosmotic flow elements (hereinafter referred to as EOF elements), each of the EOF elements being of a substantial size and having a charge ratio of about zero. Such systems do not suffer from instability during operation. There are also known systems containing a single EOF element the magnitude of the charge ratio is substantially above zero; in such systems, the electroosmotic flow can be unstable - see J. Chem. Phys., 40, pp. 2212-2222 (1964), Kobatake et al.

SUMMARY OF THE INVENTION

There is a need for EOF systems containing EOF elements which have substantial charge ratios, for example because they are very small and/or use materials having very fine pore sizes. Such systems are often unstable in operation. We have discovered, in accordance with the present invention, that in electroosmotic flow systems containing two or more EOF elements which are coupled to each other, any tendency towards unstable flow can be controlled by reducing the magnitude of the difference between the flux ratios of the EOF elements. The invention is particularly useful when the magnitude of the charge ratio of at least one of the EOF elements is substantial. One or both of the EOF elements can be a bridge between different parts of the EOF system, for example between an electrode-containing reservoir and the rest of the EOF system.

We have also discovered, also in accordance with the present invention, novel structures which are useful, for example as bridges, in electrochemical systems, including but not limited to EOF systems. Many of these novel structures are designed so that the current flux at one or both of the terminal portions of an EOF element is substantially less than the maximum current flux in the element between the terminal portions.

In a first aspect this invention provides a novel electroosmotic flow system comprising

(A) a first electroosmotic flow (EOF) element having a first terminal portion A1 and a second terminal portion A2,
(B) a second EOF element having a first terminal portion B1 and a second terminal portion B2,
(C) a junction at which the second terminal portion A2 and the first terminal portion B1 terminate, whereby the first and second EOF elements are in electrical and liquid communication;

the system having at least one of the following characteristics

(i) the magnitude of the difference between the flux ratio of the first EOF element and the flux ratio of the second EOF element is less than 0.5, preferably less than 0.25, particularly less than 0.1, especially less than 0.01, particularly about zero;
(ii) the magnitude of the charge ratio (i.e. the value without regard to sign) of
at least one of the first and second EOF elements is greater than 0.01, for example greater than 0.1, greater than 0.2 or greater than 0.3;

(iii) the charge ratios of the first and second EOF elements differ by an amount (taking into account any change in sign) of less than 0.4, preferably less than 0.2, particularly less than 0.1, especially less than 0.05, and/or the charge ratios of the first and second EOF elements have the same sign and the charge ratio of the first EOF element is from 0.9 to 1.1 times, preferably 0.95 to 1.05 times, e.g. 0.97 to 1.03 times, the charge ratio of the second EOF element;

(iv) there is a first voltage drop across one of first and second EOF elements and a second voltage drop across the other EOF element, and the first voltage drop is substantially less than the second voltage drop, for example less than 10% of the second voltage drop;

(v) the distance between the terminal portion A2 and the terminal portion B1 is less than, for example less than 0.2 times, the largest dimension of at least one, and preferably both, of the terminal portion A2 and the terminal portion B1;

(vi) the mean flow streamline through the junction has a substantial component, for example at least 80%, which is tangential to at least one of the terminal portions A2 and B1;

(vii) in at least one of the first and second EOF elements, the current flux through at least one of the first and second terminal portions is substantially less than, for example less than 0.5 times or less than 0.1 times, the maximum current flux between the first and second terminal portions;

(viii) at least one of the terminal portions A2 and B1 has a surface area in contact with the junction liquid which is substantially greater than, preferably at least 1.5 times, particularly at least 2 times or at least 3 times, for example 5 to 10 times, the effective cross-section area of the EOF element;

(ix) at least one of the terminal portions A2 and B1 has a surface area in contact with the junction liquid which is at least 2 times, preferably at least 5 times, particularly at least 10 times, especially at least 20 times, for example 5 to 100 times, or 10 to 80 times, or 10 to 50 times, or 20 to 50 times, or 20 to 40 times, the smallest cross-sectional area of the element;

(x) at least one of the terminal portions A2 and B1 comprises serrations in contact with the junction liquid, the serrations preferably having an aspect ratio which is greater than about 0.25 and preferably is less than about 4,

(xi) at least one of the first and second terminal portions of at least one of the first and second EOF elements is composed of a first material having a first charge ratio and at least part of the remainder of the EOF element is composed of a second material having a second charge ratio, the first and second charge ratios preferably fulfilling at least one of the following conditions

(a) at least one of the first and second charge ratios is greater than 0.01, for example greater than 0.1,
(b) the first and second charge ratios have the same sign,
(c) the first charge ratio is from 0.25 to 0.75 times, e.g. about 0.5 times, the second charge ratio; and

(xii) the liquid in one of the first and second EOF elements has a first flow rate and the liquid in the other EOF element has a second flow rate, and the first flow rate is less than 10%, for example less than 1%, of the second flow rate, for example substantially zero.

In a second aspect, this invention provides apparatus suitable for use in an electroosmotic flow system, the apparatus comprising

(A) a first electroosmotic flow (EOF) element having a first terminal portion A1 and a second terminal portion A2,
(B) a second EOF element having a first terminal portion B1 and a second terminal portion B2, and
(C) a junction at which the second terminal portion A2 and the first terminal portion B1 terminate;

the apparatus being such that, if it is made part of an electroosmotic flow test system which is operating under substantially steady-state conditions at 22 °C, which consists essentially of

(a) the first electroosmotic flow (EOF) element,
(b) a first reservoir which is connected to the first terminal portion A1 of the first EOF element
(c) a first electrode in the first reservoir,
(d) a second reservoir which is connected to the second terminal portion B2 of the second EOF element,
(e) a second electrode in the second reservoir,
(f) a source of electrical power connected to the first and second electrodes; and
(g) a test liquid which fills the system and which is an aqueous solution selected from the test solutions listed below, which are hereinafter referred to as "the test solutions listed herein",

1) TRIS / HCl at pH 8.5 and at 20 mM ionic strength,
2) TRIS / HCl at pH 8.5 and at 2 mM ionic strength,
3) TRIS / sorbic acid at pH 8.5 and at 20 mM ionic strength,

4) TRIS / sorbic acid at pH 8.5 and at 2 mM ionic strength,
5) potassium /HEPES at pH 8.5 and at 20 mM ionic strength,
6) potassium /HEPES at pH 8.5 and at 2 mM ionic strength,
7) BIS-TRIS / formic acid at pH 4.5 and at 20 mM ionic strength,
8) BIS-TRIS / formic acid at pH 4.5 and at 2 mM ionic strength,
9) TRIS / sorbic acid at pH 4.5 and at 20 mM ionic strength,
10) TRIS / sorbic acid at pH 4.5 and at 2 mM ionic strength,
11) potassium /TMBA at pH 4.5 and at 20 mM ionic strength,
12) potassium /TMBA at pH 4.5 and at 2 mM ionic strength,
13) BIS-TRIS / HCl at pH 6.5 and at 20 mM ionic strength,
14) BIS-TRIS / HCl at pH 6.5 and at 2 mM ionic strength,
15) B1S-TR1S / TMBA at pH 6.5 and at 20 mM ionic strength,
16) BIS-TRIS / TMBA at pH 6.5 and at 2 mM ionic strength,
17) potassium /MES at pH 6.5 and at 20 mM ionic strength,
18) potassium /MES at pH 6.5 and at 2 mM ionic strength,
19) 5mM sodium /MES buffer at pH of 6.5, and
20) 1 mM TRIS/HCl at pH of about 8.25;

the test system has at least one of the following characteristics

(i) the magnitude of the difference between the flux ratio of the first EOF element and the flux ratio of the second EOF element is less than 0.5, preferably less than 0.25, particularly less than 0,1, especially less than 0.01, particularly about zero;

(ii) the magnitude of the charge ratio of at least one of the first and second EOF elements is greater than 0.01, for example greater than 0.1, greater than 0.2 or greater than 0.3;

(iii) the liquid in one of the first and second EOF filaments has a first flow rate and the liquid in the other EOF element has a second flow rate, and first flow rate is less than 10%, for example less than 1%, of the second flow rate, for example a zero flow rate;

(iv) there is a first voltage drop across one of the first and second EOF elements and a second voltage drop across the other EOF element, and the first voltage drop is substantially less than, for example less than 10% of, the second voltage drop;

(v) the distance between the terminal portion A2 and the terminal portion B1 is less than, for example less than 0.2 times, the largest dimension of at least one, and preferably both, of the terminal portion A2 and the terminal portion B1;

(vi) the mean flow streamline through the junction has a substantial component, for example at least 25 %, preferably least 50%, for example at least 80%, which is tangential to at least one of the terminal portions A2 and B1;

(vii) in at least one of the first and second EOF elements, the current flux through at least one of the first and second terminal portions is substantially less than, for example less than 0.1 times, the maximum current flux between the first and second terminal portions;

(viii) at least one of the terminal portions A2 and B1 has an exposed surface area in contact with the junction liquid which is substantially greater than, preferably at least 1.5 times, particularly at least 2 times or at least 3 times, for example 5 to 10 times, the effective cross-section area of the EOF element of which it is a part;

(ix) at least one of the terminal portions A2 and B1 comprises serrations, the serrations preferably having an aspect ratio which is greater than about 0.25 and preferably is less than about 4, for example 1 to 3; and

(x) at least one of the terminal portions of at least one of the first and second EOF elements is composed of a first material having a first charge ratio and at least part of the remainder of the EOF element of which it is part is composed the second material having a second charge ratio, the first and second charge ratios preferably fulfilling at least one of the following conditions

(a) the magnitude of at least one of the first and second charge ratios is greater than 0.01, for example greater than 0.1,
(b) the first and second charge ratios have the same sign,
(c) the first charge ratio is from 0.25 to 0.75 times, e.g. about 0.5 times, the second charge ratio.

In a third aspect, this invention provides an electroosmotic flow (EOF) element comprising a conduit which terminates in first and second terminal portions, at least one of the terminal portions having at least one of following characteristics

(a) it has an exposed surface area which is substantially greater than, preferably at least 1.5 times, particularly at least 2 times or at least 3 times, for example 5 to 10 times, the effective cross-section area of the EOF element;
(b) it comprises serrations, the serrations preferably having an aspect ratio which is greater than about 0.25 and preferably is less than about 4,
(c) it is composed of a first material having a first charge ratio and at least part of the remainder of the EOF element is composed of a second material having a second charge ratio, the first and second charge ratios preferably fulfilling at least one of the following conditions

(ci) at least one of the first and second charge ratios is greater than 0.01, for example greater than 0.1,
(cii) the first and second charge ratios have the same sign,
(ciii) the first charge ratio is from 0.25 to 0.75 times, e.g. about 0.5 times, the second charge ratio, and

(d) it has a surface area which is at least 2 times, preferably at least 5 times, particularly at least 10 times, especially at least 20 times, for example 5 to 100 times, or 10 to 80 times, or 10 to 50 times, or 20 to 50 times, or 20 to 40 times, the smallest cross-sectional area of the element.

In a fourth aspect, this invention provides apparatus suitable for use in an electroosmotic flow system, the apparatus comprising

(A) a first electroosmotic flow (EOF) element having a first terminal portion A1 and a second terminal portion A2,
(B) a second EOF element having a first terminal portion B1 and a second terminal portion B2, and
(C) a junction at which the second terminal portion A2 and the first terminal portion B1 terminate;

the apparatus having at least one of the following characteristics

(i) the distance between the terminal portions A2 and B1 is less than, for example less than 0.2 times, the largest dimension of at least one, and preferably both, of the terminal portion A2 and the terminal portion B1;
(ii) at least one of the terminal portions A2 and B1 has an exposed surface area which is substantially greater than, preferably least 1.5 times, particularly at least 2 times or at least 3 times, for example 5 to 10 times, the effective cross-section of the EOF element of which it is a part;
(iii) at least one of the terminal portions A2 and B1 has an exposed surface area which is at least 2 times, preferably least 5 times, particularly at least 10 times, especially at least 20 times, for example 5 to 100 times, or 10 to 80 times, or 10 to 50 times, or 20 to 50 times, or 20 to 40 times, the smallest cross-sectional area of the element;
(iv) at least one of the terminal portions A2 and B1 comprises serrations such that the surface area of the terminal portion is substantially greater than the effective cross-section area of the EOF element of which it is part, the serrations preferably having an aspect ratio which is greater than about 0.25 and preferably is less than about 4; and
(v) at least one of the terminal portions is composed of a first material having a first charge ratio and at least part of the remainder of the EOF element of which it is part is composed of a second material having a second charge ratio, the first and second charge ratios preferably fulfilling at least one of the following conditions

(a) at least one of the first and second charge ratios is greater than 0.01, for example greater than 0.1,
(b) the first and second charge ratios have the same sign,
(c) the first charge ratio is from 0.25 to 0.75 times, e.g. about 0.5 times, the second charge ratio.

In a fifth aspect, the invention provides a method of determining whether an EOF system is likely to suffer from instability during operation, the method comprising determining the magnitude of the difference in flux ratio between each pair of EOF elements connected to the same junction.
In a sixth aspect of the present invention, there is provided a novel electroosmotic flow system comprising:

(A) a first electroosmotic flow (EOF) element having a first terminal portion A1 and a second terminal portion A2,

(B) a second EOF element having a first terminal portion B1 and a second terminal portion B2,

(C) a junction at which the second terminal portion A2 and the first terminal portion B1 terminate, whereby the first and second EOF elements are in electrical and liquid communication;

the system having at least one of the following characteristics:

i) the magnitude of the difference between the flux ration of the first EOF element and the flux ratio of the second EOF element is less than 0.5;

ii) the magnitude of the charge ratio of at least one of the first and second EOF elements is greater than 0.01;

iii) the liquid in one of the first and second EOF elements has a first flow rate and the liquid in the other EOF element has a second flow rate, and the first flow rate is less than 10% of the second flow rate;

iv) there is a first voltage drop across one of first and second EOF elements and a second voltage drop across the other EOF element, and the first voltage drop is substantially less than the second voltage drop;

v) the distance between the terminal portion A2 and the terminal portion B1 is less than the largest dimension of at least one of the terminal portion A2 and the terminal portion B1;

vi) the mean flow streamline through the junction has a substantial component which is tangential to at least one of the terminal portions A2 and B1;

vii) in at least one of the first and second EOF elements, the current flux through at least one of the first and second terminal portions is substantially less than the maximum current flux between the first and second terminal portions;

viii) at least one of the terminal portions A2 and B1 has a surface area in contact with the junction liquid which is substantially greater than the effective cross-section area of the EOF element;

ix) at least one of the terminal portions A2 and B1 has a surface area in contact with the junction liquid which is at least 2 times the smallest cross-sectional area of the element;

x) at least one of the terminal portions A2 and B1 comprises serrations in contact with the junction liquid;

xi) at least one of the first and second terminal portions of at least one of the first and second EOF elements is composed of a first material having a first charge ratio and at least part of the remainder of the EOF element is composed of a second material having a second charge ratio.

Preferably wherein the magnitude of the difference between the flux ratio of the first EOF element and the second EOF element is less than 0.1.

Further preferably wherein the magnitude of the charge ratio of at least one of the first and second EOF elements is greater than 0.01, or wherein each of the first and second EOF elements is a conduit contains a porous material, and the porous material provides each of the first and second terminal portions.

Preferably further comprising:

(i) a reservoir containing a liquid containing ions,

(ii) an electrode which directly contacts the liquid in the reservoir,

and wherein the first terminal portion of first EOF element terminates in the reservoir, whereby the first EOF element is a bridge element between the reservoir and the second EOF element.

Also preferably wherein the liquid in said bridge element has a first flow rate, and the liquid in the second EOF element has a second flow rate, and the first flow rate is less than 10% of the second flow rate.

Preferably wherein at least one of the electroosmotic flow rate and the hydrostatic pressure flow rate of the liquid in said bridge element is substantially zero.

Preferably wherein there is a first voltage drop across the bridge element and a second voltage drop across the second EOF element, and the first voltage drop is substantially less than the second voltage drop.

Preferably wherein the second terminal portion of the bridge element has a surface area in contact with the junction liquid which is substantially greater than the effective cross-section area of the bridge element.

Preferably wherein the terminal portion B1 of the second EOF element has a surface area in contact with the junction liquid which is substantially greater than the effective cross-section area of the second EOF element.

Preferably wherein the distance between the terminal portions A2 and B1 of the first and second EOF elements is less than the largest dimension of each of the terminal portions A2 and B1.

Preferably wherein the mean flow streamline through the junction has a substantial component which is tangential to the terminal portion of at least one of the first and second EOF elements.

Preferably wherein at least one of the terminal portion B2 of the first EOF element and the terminal portion A1 of the second EOF element comprises serrations.

Preferably wherein, in at least one of the first and second EOF elements, the terminal portion is composed of a first material having a first charge ratio and at least part of the remainder of the EOF element is composed of a second material having a second charge ratio.

Preferably wherein at least one of the following conditions is fulfilled:

i) at least one of the first and second charge ratios is greater than 0.1,
ii) the first and second charge ratios have the same sign,
iii) the first charge ratio is from 0.25 to than 0.75 times the second charge ratio.

According to a seventh aspect of the present invention there is provided apparatus suitable for use in an electroosmotic flow system, the apparatus comprising:

(A) a first electroosmotic flow (EOF) element having a first terminal portion A1 and a second terminal portion A2,
(B) a second EOF element having a first terminal portion B1 and a second terminal portion B2, and
(C) a junction at which the second terminal portion A2 and the first terminal portion B1 terminate,

the apparatus being such that, if it is made part of an electroosmotic flow test system which is operating under substantially steady-state conditions at 22°C and which consists essentially of

(a) the first electroosmotic flow (EOF) element,
(b) a first reservoir which is connected to the first terminal portion A1 of the first EOF element
(c) a first electrode in the first reservoir,
(d) a second reservoir which is connected to the second terminal portion B2 of the second EOF element,
(e) a second electrode in the second reservoir,
(f) a source of electrical power connected to the first and second electrodes, and
(g) an aqueous solution which fills the system and which is selected from the test solutions listed herein,

the test system has at least one of the following characteristics

i) the magnitude of the difference between the flux ratio of the first EOF element and the flux ratio of the second EOF element is less than 0.5;
ii) the magnitude of the charge ratio of at least one of the first and second EOF elements is greater than 0.01;
iii) the liquid in one of the first and second EOF elements has a first flow rate and the liquid in the other EOF element has a second flow rate, and the first flow rate is less than 10% of the second flow rate, for example a zero flow rate;
iv) there is a first voltage drop across one of first and second EOF elements and a second voltage drop across the other EOF element, and the first voltage drop is substantially less than the second voltage drop;
v) the distance between the terminal portion A2 and the terminal portion B1 is less than the largest dimension of at least one of the terminal portion A2 and the terminal portion B1;
vi) the mean flow streamline through the junction has a substantial component which is tangential to at least one of the terminal portions A2 and B1;
vii) in at least one of the first and second EOF elements, the current flux through at least one of the first and second terminal portions is substantially less than the maximum current flux between the first and second terminal portions;
viii) at least one of the terminal portions A2 and B1 has an exposed surface area in contact with the junction liquid which is substantially greater than the effective cross-section area of the EOF element of which it is a part;
ix) at least one of the terminal portions A2 and B1 comprises serrations; and
x) at least one of the terminal portions of at least one of the first and second EOF elements is composed of a first material having a first charge ratio and at least part of the remainder of the EOF element of which it is part is composed the second material having a second charge ratio.

According to an eighth aspect of the present invention, there is provided an electroosmotic flow (EOF) element comprising a conduit which terminates in first and second terminal portions, at least one of the terminal portions having at least one of following characteristics

a) it has an exposed surface area which is substantially greater than the effective cross-section area of the EOF element;
b) it comprises serrations;
c) it is composed of a first material having a first charge ratio and at least part of the remainder of the EOF element is composed of a second material having a second charge ratio; and
d) it has a surface area which is at least 2 times the smallest cross-sectional area of the element.

According to a ninth aspect of the present invention, there is provided apparatus suitable for use in an electroosmotic flow system, the apparatus comprising

    (A) a first electroosmotic flow (EOF) element having a first terminal portion A1 and a second terminal portion A2,
    (B) a second EOF element having a first terminal portion B1 and a second terminal portion B2, and
    (C) a junction at which the second terminal portion A2 and the first terminal portion B1 terminate;

the apparatus having at least one of the following characteristics;

    i) the distance between the terminal portions A2 and B1 is less than the largest dimension of at least one of the terminal portion A2 and the terminal portion B1;
    ii) at least one of the terminal portions A2 and B1 has an exposed surface area which is substantially greater than the effective cross-section of the EOF element of which it is a part;
    iii) at least one of the terminal portions A2 and B1 has an exposed surface area which is at least 2 times the smallest cross-sectional area of the element of which it is a part;
    iv) at least one of the terminal portions A2 and B1 comprises serrations; and
    v) at least one of the terminal portions is composed of a first material having a first charge ratio and at least part of the remainder of the EOF element of which it is part is composed of a second material having a second charge ratio.

**BRIEF DESCRIPTION OF THE DRAWINGS**

The invention is illustrated in the accompanying drawings in which

    Figure 1 is a diagrammatic cross-section of an EOF system,
    Figure 2 is a diagrammatic cross-section of a part of an EOF system according to the invention,
    Figure 3 is a diagrammatic cross-section on line III-III of Figure 2,
    Figure 4 is a diagrammatic cross-section of a part of another EOF system according to the invention,
    Figure 5 is a diagrammatic cross-section of a part of another EOF system according to the invention,
    Figure 6 is a diagrammatic cross-section on line VI-VI of Figure 5,
    Figure 7 is a diagrammatic cross-section of a part of another EOF system according to the invention,
    Figure 8 is an enlarged view of part of Figure 7,
    Figure 9 is a diagrammatic cross-section of a part of another EOF system according to the invention,
    Figure 10 is a diagrammatic cross-section of part of another EOF system according to the Invention, and
    Figure 11 is a diagrammatic representation of another EOF system.

DETAILED DESCRIPTION OF THE INVENTION

In the Summary of the Invention above and in the Detailed Description of the Invention, the Examples, and the claims below, reference is made to particular features of the invention. It is to be understood that the disclosure of the invention in this specification includes all appropriate combinations of such particular features. For example, where a particular feature is disclosed in the context of a particular aspect or embodiment of the invention, or a particular Figure, or a particular claim, that feature can also be used, to the extent appropriate, in combination with and/or in the context of other particular aspects and embodiments of the invention, and in the invention generally.

The term "comprises", and grammatical equivalents thereof, are used herein to mean that other components, ingredients, steps etc. are optionally present in addition to the component(s), ingredient(s), step(s) specifically listed after the term "comprises". The term "at least" followed by a number is used herein to denote the start of a range beginning with that number (which may be a range having an upper limit or no upper limit, depending on the variable being defined). For example "at least 1" means 1 or more than 1, and "at least 80%" means 80% or more than 80%. The term "at most" followed by a number is used herein to denote the end of a range ending with that number (which may be a range having 1 or 0 as its lower limit, or a range having no lower limit, depending upon the variable being defined). For example, "at most 4" means 4 or less than 4, and "at most 40%" means 40% or less than 40 %. When, in this specification, a range is given as "(a first number) to (a second number)" or "(a first number) - (a second number)", this means a range whose lower limit is the first number and whose upper limit is the second number.

To determine the effective cross section of a generally-shaped element requires a knowledge of some properties of the porous media within the conduit. The properties can be determined using a sample of the porous media in a conduit of known and well-defined cross sectional area ARR and length LRR. The geometry factor of this test sample is, according to the prescription already given, gRR = 1/srRR. Using the test liquid of conductivity s, the geometry factor of the generally-shaped element filled with the same porous media is g =1/sr. The length of this element is L, being the distance from one terminal end to the other terminal end measured along the local axis of the element. The effective area of the element is then given by

$$Aeffective = ARR\ (L/LRR)\ rRR/r.$$

For the case where the generally-shaped element does not contain porous material this definition reduces to Aeffective = L s rRR.

In describing and claiming the invention below, the following abbreviations and definitions (in addition to those already given) are used. Unless otherwise stated, the units of these quantities are those given below.

| | | |
|---|---|---|
| A | area | $m^2$ |
| L | axial length | m |
| F | Faraday constant | $9.65 \times 10^4$ Coulomb/mole |
| FN | formation factor | dimensionless |
| $\rho$ | electrical resistance | Ohm |
| $\sigma$ | electrical conductivity | mho/m |
| $R_f$ | liquid flux ratio | dimensionless |
| e | elemental charge | 1.602E-19 Coulomb |
| $\varepsilon$ | liquid permittivity, product of liquid relative permittivity and $\varepsilon_o$ | Farad/m |
| $\varepsilon_o$ | permittivity of free space | 8.854E-12 Farad/m |
| $k_b$ | Boltzman constant | 1.38E-23 Joule/Kelvin |
| T | absolute temperature | Kelvin |
| $\mu$ | liquid dynamic viscosity | Pascal-seconds |
| $\zeta$ | zeta potential | Volts |
| E | electric field | Volts/m |
| J | current flux | Amperes/$m^2$ |
| $J_D$ | solute displacement flux | Amperes/$m^2$ |
| R | flux ratio | dimensionless |
| $\lambda$ | Debye length | m |
| $\Lambda$ | dynamic pore scale | m |
| n | Ion mobility | $m^2$/Volt-second |
| Q | flowrate | liter/second |
| C | concentration | number/$m^3$ |
| I | current | Amperes |
| v | electroosmotic mobility | $m^2$/Volt-second |
| cr | charge ratio | dimensionless |
| g | geometry factor (=A/LF$_n$) | *m* |
| k | flow conductance (=M$\Lambda^2$g/$\mu$) | liters/second-Pascal |
| M | pore geometry number | dimensionless |
| P | pressure | Pascals |
| V | voltage | Volts |
| K | load factor | dimensionless |
| TRIS | tris-hydroxymethyl-aminomethane | |
| MES | 2-morpholinoethanesulfonic acid | |
| BIS-TRIS | bis-2-hydroxyetheyl-imino-tris-hydroxymethyl-aminomethane | |
| HEPES | 4-2-hydroxyethyl-piperazine-1-ethanesulfonic acid | |
| HCl | Hydrochloric acid | |
| TMBA | tri-methoxybenzoic acid | |

Flux Ratio

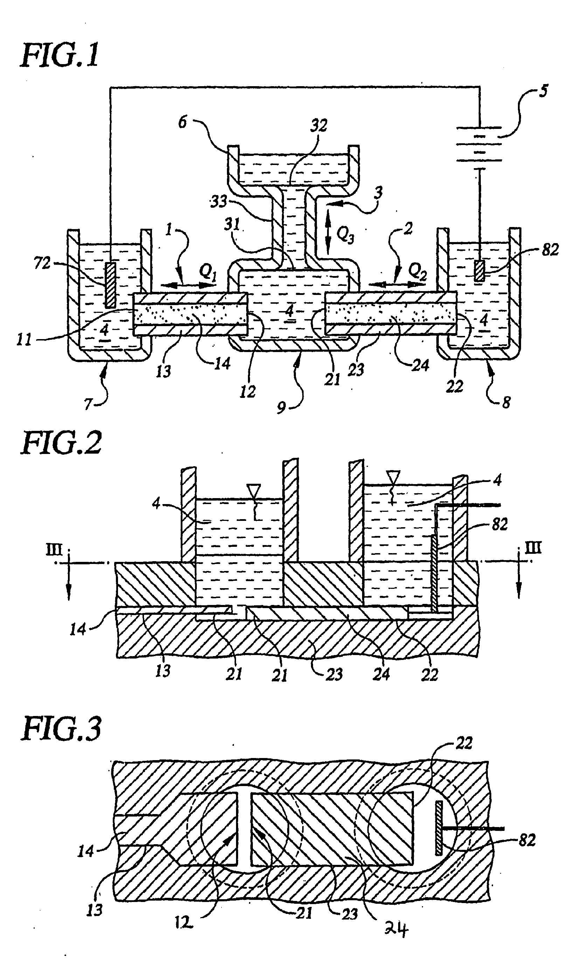

Flux ratio is the ionized species solute displacement flux per unit current flux through an EOF element. The flux ratio for any individual EOF element can be obtained by appropriate calculation and observation. However, for purposes of the present invention, the magnitude of the difference between the flux ratios of two EOF elements connected to the same junction in an operating EOF system is preferably obtained by measuring particular variables, followed by appropriate calculation, as explained below with reference to Figure 1. The possible range for the flux ratio of an individual EOF element is from -1 to +1. The calculation set out below gives the magnitude of the difference (i.e. the absolute difference) between the flux ratios, i.e. with a theoretically possible range of 0 to 2.

Figure 1 is a diagrammatic cross-section of an EOF system comprising first and second EOF elements 1 and 2, passive flow element 3, reservoir 6, and electrode reservoirs 7 and 8, which contain electrodes 72 and 82 respectively connected to DC power source 5. The system is filled with an ionic liquid 4 through which ionic current flows. EOF element 1 comprises a wall 13 enclosing a porous medium 14, and has first and second terminal portions 11 and 12. EOF element 2 comprises a wall 23 enclosing a porous medium 24, and has first and second terminal portions 21 and 22. Element 3 has a wall 33 defining an open conduit, and has a terminal portions 31 and 32. The terminal portions 12,21, and 31 open into a junction 9 containing the liquid 4 at a concentration C9. The current through the junction 9 is Ij and is positive when it flows from EOF element 1 towards EOF element 2. Terminal portion 11 opens into electrode reservoir 7 containing the liquid 4 at a concentration C7. Terminal portion 22 opens into electrode reservoir 8 containing liquid 4 at a concentration C8. Terminal portion 32 opens into a reservoir 6 containing liquid 4 at a concentration C6. Liquid 4 flows through element 1 at a rate Q1, through element 2 at a rate Q2, and through element 3 at a rate Q3.

The magnitude of the difference between the flux ratios of the two EOF elements (R1- R2) can be calculated from the equation

$$R1 - R2 \stackrel{\subset}{=} \sum QkCk * F / Ij$$

where ΣQkCk is the sum of the quantity Qk*Ck for each EOF element flowing into the junction, where Qk is the rate of flow in microliters per minute and Ck is the difference between (i) concentration in millimole/liter at the terminal portion of the EOF element remote from the junction and (ii) the concentration in millimole/liter at the junction,

F is the Faraday constant (9.65 x 10$^4$ Coulomb/mole), and

Ij is the current through the junction in microamps. The sign of the quantity will depend on the sign of the current. However, for the purposes of the present invention, the magnitude of the difference between the flux ratios does not depend on the sign of the quantity resulting from the above calculation.

The Table below shows how the magnitude of the difference in flux ratios between the two EOF elements is calculated for the different possible flow directions ("in" being towards the junction 9, and "out" being away from the junction 9) in the EOF system of Figure 1 when the ionic liquid is a simple salt dissolved in a solvent. The calculation when Q3 is zero is applicable also to a system in which there is no passive flow element 3. The calculation when Q1 is zero is applicable to a system in which EOF element 1 is a bridge.

| Q1 | Q2 | Q3 | R1-R2 |
|------|------|------|-------|
| out | out | in | {Q3*(C6 - C9)}*F/ Ij |
| out | in | in | {Q2*(C8 - C9) + Q3*(C6 - C9) }*F/Ij |
| in | out | out | {Q1*(C7 - C9)}*F/Ij |
| in | out | zero | {Q1*(C7 - C9)}*F/Ij |
| in | zero | out | {Q1*(C7 - C9)}*F/Ij |
| zero | in | out | {Q2*(C8-C9)}*F/Ij |

By way of example, if, in the circumstances shown in the last entry in the Table above, Q2 is 2 microliters per minute, C8 is 5 millimole/liter, C9 is 4.5 millimole/liter, and Ij is -4 microamps, the value of (R1-R2) is about -0.402, and the "magnitude of the difference between the flux ratios" is 0.402.

When three or more current-carrying EOF elements are connected to a single junction, the corresponding equations will contain separate terms for the magnitude of the differences in flux ratios between different pairs of EOF elements. By adjusting the system so that each pair of EOF elements in turn are the only elements carrying current, the differences in flux ratios between each pair of elements can be determined. Alternatively, by measuring the values of the different variables with the currents through the system at two or more sets of values, two or more simultaneous equations can be obtained and can be solved to calculate the magnitude of the differences in flux ratios between the different pairs of EOF elements. Those skilled in the art will have no difficulty, having regard to their own knowledge and the disclosure of this specification, in carrying out such calculations.

When the ionic liquid is a polyvalent or complex electrolyte, the calculations are somewhat different, but again those skilled in the art will have no difficulty, having regard to their own knowledge of the disclosure of this specification, in carrying out such calculations.

Charge Ratio

The charge ratio on an EOF element is the weighted-volume equivalent concentration of surface charge divided by the ionic strength concentration of the bulk liquid. The charge ratio is a measure of the extent to which the EOF element contain surfaces having a net charge. In the bulk liquid of the EOF element, there are equal quantities of positive and negative charge, and the fraction of the current carried by any particular ion depends on its mobility. In a charged surface layer, however, there is an excess of charge of one sign or the other, and the fraction of the current carried by any particular ion depends both on its mobility and the excess or deficit of that ion. This results, when EOF elements having different charge ratios are connected in series, in a mismatch in the ion fluxes at the junction between the elements. As a result, at the junction, a concentration/diffusion layer forms at the interface between the EOF elements and the junction liquid; and in the junction liquid, the concentration of one type of ion continuously increases, and the concentration of the other type of ion continuously decreases. This often causes instability, for example in the current and/or the flow rate. The mismatch is particularly serious (and the solutions provided by the present invention particularly valuable) in microliquid systems having small reservoir and junction volumes, especially in chemical analysis systems, and in systems operating under pressure differences greater than 0.7 kg/cm$^2$ (10 psi), for example greater than 7 kg/cm$^2$ (100 psi), or greater than 70 kg/cm$^2$ (1000 psi), e.g. 7 to 700 kg/cm$^2$ (100 to 10000 psi) or 35 to 350 kg/cm$^2$ (500 to 5000 psi).

For an EOF element filled with a binary univalent electrolyte pair, the charge ratio (cr) can be calculated from the equation

$$cr = (-8\lambda / \Lambda)\sinh (e\zeta / 2k_b T)$$

where $\lambda$ is the Debye length (in meters) in the bulk liquid, $\Lambda$ is the dynamic pore scale (in meters) and $\zeta$ is the zeta potential (in volts). $\Lambda$ Is used to characterize the diameter of the falls in a porous medium. For a right regular conduit that is not filled with porous material, $\Lambda$ Is equivalent to the hydraulic diameter. Those skilled in the art know how to calculate the charge ratio when more complex electrolytes are used. The sign of the charge ratio may be positive or negative. If the values of the variables in this equation are not known, they can be determined by the following procedure. The EOF element is filled with a liquid having a known bulk conductivity $\sigma$ (in mho/m). The electrical resistance ($\rho$ in Ohm) of the liquid-filled element is determined. A geometry factor (g) is calculated from the equation

$$g = 1 / \sigma\rho$$

The electroosmotic flowrate, $Q_{eo}$, through the element is measured in response to an electrical potential $\Delta V$ applied across the element. $Q_{eo}$ is given by the equation

$$Q_{eo} = \varepsilon \, \zeta \, \Delta V \, g / \mu$$

where $\varepsilon$ is the permittivity of the liquid and $\mu$ is the dynamic viscosity of the liquid.
$Q_{eo}$ is also given by the equation

$$Q_{eo} = \varepsilon \, \zeta \, I / \mu \, \sigma$$

where I is the current flowing through the element due to the applied potential $\Delta V$ across the element. Using this equation and the previously determined values for $Q_{eo}$, $\varepsilon$, $l$, $\mu$ and $\sigma$, the zeta potential, $\zeta$, is calculated. A pressure difference $\Delta P$ is then applied across the element in place of the applied potential, and the pressure-driven flowrate, $Q_p$, through the element is measured. $Q_p$ is given by the equation

$$Q_p = \Lambda^2 \, \Delta P \, g \, / \, 32 \, \mu$$

Using this equation and the previously determined values for $Q_p$, $\Delta P$, $g$, and $\mu$, the dynamic pore scale, $\Lambda$, is calculated. Finally, the equation

$$cr = (-8\lambda / \, \Lambda)sinh \, (e\zeta \, / \, 2k_bT)$$

is applied using the above-determined parameters to calculate the charge ratio.

The invention is particularly useful when the magnitude of the charge ratio of at least one of the EOF elements is greater than 0.01, for example greater than 0.1,greater than 0.2 or greater than 0.3, because such EOF elements, tend to cause unstable operation. In the EOF systems of the invention and in the test systems used to identify apparatus according to the second aspect of the invention, preferably the magnitude of the charge ratio of at least one of the first and second EOF elements is greater than 0.01, for example greater than 0.1, greater than 0.2 or greater than 0.3; and/or

Ionic Liquids

The ionic liquid can be an aqueous liquid or an organic liquid or a mixture of aqueous and organic liquids.

There will often be at least one type of ion which is present in all the ionic liquids in the different parts of the EOF system, and at least some (for example, all) of the ionic liquids in the different parts of the EOF system may be the same (though their concentrations will generally vary). However, as in conventional systems, bridges may be used to limit or prevent mixing of different ionic liquids.

Often, the choice between the different variables for the EOF systems of the invention will be driven by the ionic liquid which is to flow through the system. Those skilled in the art will have no difficulty, having regard to their own knowledge and the disclosure in this specification, in making appropriate selections among different materials, EOF elements, system configurations, power supplies etc. A system which has been designed for one set of circumstances may be operable under many other sets of circumstances, but may not be optimal.

The third and fourth aspects of the invention providing novel EOF elements and apparatus which fall within the scope of the invention whether or not they are part of an operating EOF system, and which do not require testing in an operating EOF system to determine whether they are within the scope of the invention. The second aspect of the invention includes apparatus which may require testing in order to determine whether it is within the scope of the invention. Such apparatus can easily be tested and examined to determine whether it has one or more of the characteristics (i)-(xi) set out in the second aspect of the invention. The procedure for such testing is described below. First, any components needed to convert the apparatus into an operating EOF system are added, including a suitable test liquid and a power supply which will produce electroosmotic flow at a rate that enables measurements to be made in a reasonable time frame. The test liquid is one of the 20 test solutions listed herein. After transient start-up conditions have disappeared, the test system is examined to see whether it has one or more of the characteristics ((i)-(xi) set out in the second aspect of the invention. The test system may have one or more of those characteristics in separate tests using two, or even more, for example five, of the twenty test liquids named herein.

Conduits and Porous Materials

It is possible for one or more of the EOF elements to be an "open" conduit, i.e. a conduit which does not contain any packing material. However, the EOF elements are generally conduits with liquid-impermeable walls partially or fully enclosing a porous material or a plurality of fine channels. The choice of appropriate porous materials is often a useful factor in designing a satisfactory system of the invention. There may be two or more porous materials within a conduit, in which case the different porous materials can be spaced longitudinally and/or transversely. The conduit can be straight or regularly or irregularly curved. The cross-section of the conduit (i.e. a section at right angles to the local axis of the conduit) can be of any shape, for example a closed cross-section, e.g. circular, rectangular (including square) or hexagonal, or an open cross-section, e.g. a trench-like cross-section, and can be constant or can vary in shape and/or area along the length of the conduit. One or both ends of the walls of the conduit can be shaped differently from the intermediate portion of the conduit, particularly with the aim of providing terminal portions as discussed below. The shapes of the ends of the conduit may be the same or different.

The smallest cross-sectional area of a conduit is defined herein as the area of the smallest cross-section occupied by a porous material. The surface area of the terminal portion of a conduit containing porous material is defined herein as the total geometric area of the face that passes current and/or flow, ignoring any irregularities having a length less than 10 microns.

When the conduit contains a porous material, the porous material can extend out from the conduit, be flush with the end of the conduit, or terminate within the conduit. The face(s) of the porous material exposed to the junction liquid can be planar or can be shaped, particularly with the aim of providing a terminal portion as discussed below. The shapes and positioning of the end sections of the porous material can be the same or different.

Conduits and porous materials suitable for use as EOF elements are well-known to those skilled in the art, who will have no difficulty, having regard to their own knowledge and the disclosure of this specification, in selecting suitable conduits and porous materials for use In the invention. Reference may be made for example to Philipse, J. Mat. Sci. Lett. 8 pp. 1371-1373 (1989); Wijnhoven et al., Science 281 pp. 802-804 (1998); T. Yazawa, Key Engineering Materials, ' 115 pp. 125-146 (1996); Ma, et al., Microporous and Mesoporous Materials 37 pp. 243-252 (2000).. Nakanishi et al, J. Non-crystalline Solids 139 pp. 1-13 (1992), Peters et al, Anal. Chem. 69 pp. 3646-3649 (1997). Drott et al, J. Micromech. Microeng. 7 pp 14-23 (1997), Jessensky et al, J. Electrochem. Soc. 145 pp. 3735-3740 (1998). The porous material can be a material which has been modified to improve its properties, for example the size and/or magnitude of the zeta potential, for example as described in copending, commonly assigned U.S. application Serial No. 09/942,884 (Publication No. 20020189947). The porous materials may be fabricated in-conduit or may be fabricated, machined or cut, and then inserted or sealed into the conduit, or, as is the case with microchannel arrays, the porous dielectric material may be machined so as to require no exogenous channel, the channel being formed by the walls of the substrate from which the array is machined. The surface properties may be altered before or after placement within a conduit (or channel).

The pore size and zeta potential of the porous material in EOF elements are important factors in determining the flux ratio and/or charge ratio of the EOF element, and those skilled in the art will have no difficulty, having regard to their own knowledge and the disclosure of this specification, in correlating these and other variables (for example the physical dimensions of the conduit and of the porous material) to provide systems in accordance with the invention.

Flow Rates

In some embodiments of the invention, one of the EOF elements is a bridge between an electrode-containing reservoir containing one liquid and the rest of the EOF system containing a different liquid (the "working liquid"). Particularly in such embodiments, the rate of flow of liquid through the bridge (as a result of electroosmotic forces and/or pressure differences) may be less than 10%, preferably less than 1%, for example less than 0.01 %, of the maximum rate of flow of the working liquid in the rest of the EOF system, for example a substantially zero rate of flow.

Voltage Drops

In some embodiments of the invention; one of the EOF elements is a bridge between an electrode-containing reservoir containing one liquid and the rest of the EOF system containing the working liquid. Particularly in such embodiments, the voltage drop across the bridge is substantially less than, for example less than 0.1 times, the voltage drop across at least one, and optionally each, of the other EOF elements in the system.

Design and Placement of Terminal Portions

As noted above in the discussion of the Charge Ratio, and EOF element having a substantial charge ratio can result in a concentration/diffusion layer at the face of the EOF element in contact with the junction liquid. The present invention makes it possible to design terminal portions of EOF elements, and to place different terminal portions relative to each other at a junction, so as to reduce the thickness of any such concentration/diffusion layer, and thus to provide more stable operation of the EOF system. Preferred features of the terminal portions include the following.

1. The minimum distance between two terminal portions (of different EOF elements) terminating at a junction is less than the largest dimension of at least one, and preferably both, of the terminal portions.

2. The terminal portions (of different EOF elements) terminating at a junction are designed and placed so that the mean flow streamline through the junction has a substantial component which is tangential to at least one of the terminal portions.

3. The terminal portions of the EOF element are designed so that the current flux through at least one of the terminal portions is substantially less than the maximum current flux between the terminal portions.

4. The terminal portion of at least one of the EOF elements at a junction has an exposed surface area which is substantially greater than, preferably at least 1.5 times, particularly at least 2 times or at least 3 times, for example 5 to 10 times, the effective cross-section area of the EOF element;

5. The terminal portion of at least one of the EOF elements terminating at a junction has a surface area which is at least 2 times, preferably at least 5 times, particularly at least 10 times, especially at least 20 times, for example 5 to 100 times, or 10 to 80 times, or 10 to 50 times, or 20 to 50 times, or 20 to 40 times, the smallest cross-sectional area of the EOF element of which it is part.

6. The terminal portion comprises serrations, the serrations preferably having an aspect ratio which is greater than about 0.25 and preferably is less than about 4.

7. The terminal portion is composed of a first material having a first charge ratio and at least part of the remainder of the EOF element is composed of a second material having a second charge ratio, the first and second charge ratios preferably fulfilling at least one of the following conditions

(i) at least one of the first and second charge ratios is greater than 0.1, and to
(ii) the first and second charge ratios have the same sign, .
(iii) the first charge ratio is from 0.25 to 0.75 times, e.g. about 0.5 times, the second charge ratio.

Figures 2-10 illustrate terminal portions according to the Invention, and make use of the same reference numerals as Figure 1. In Figures 2 and 3, the terminal portions 12,21 and 22 are provided by porous materials 14 and 24 which extend beyond the walls 13 and 23. The terminal portion 12 flares out to increase its exposed surface area. The porous material 24 has an increased thickness in order to reduce the voltage drop across the EOF element 2.

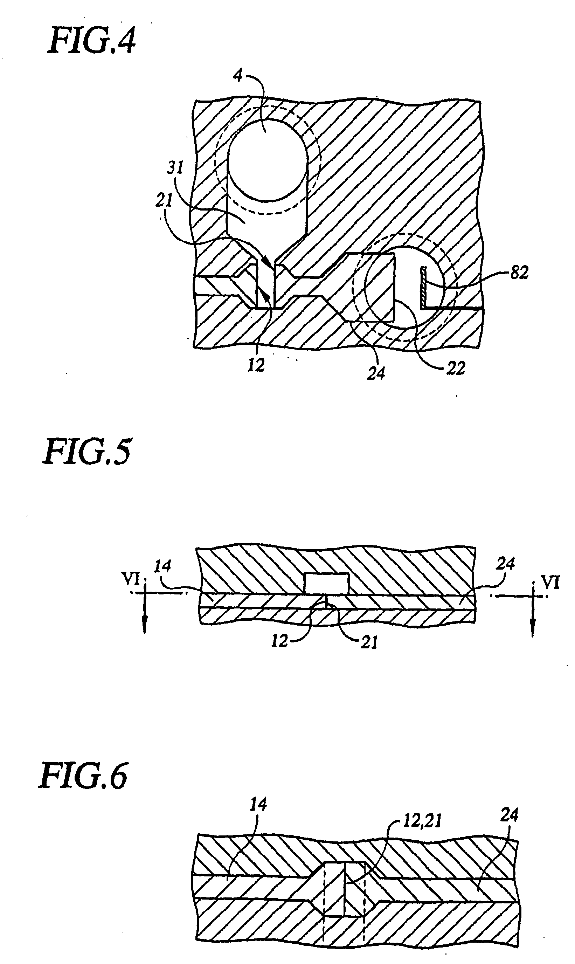

In Figure 4, each of the terminal portions 12,21 and 22 is provided by a porous material 14,24 which is flared out to increase its exposed surface area. Passive element 31 is a short wide conduit through which the pressure drop is negligible.

In Figures 5 and 6, each of the terminal portions 12 and 21 is provided by a porous material 14,24 which is flared out to increase its surface area, and the terminal portions are in direct contact with each other, thus minimizing the volume of bulk liquid enclosed by the faces.

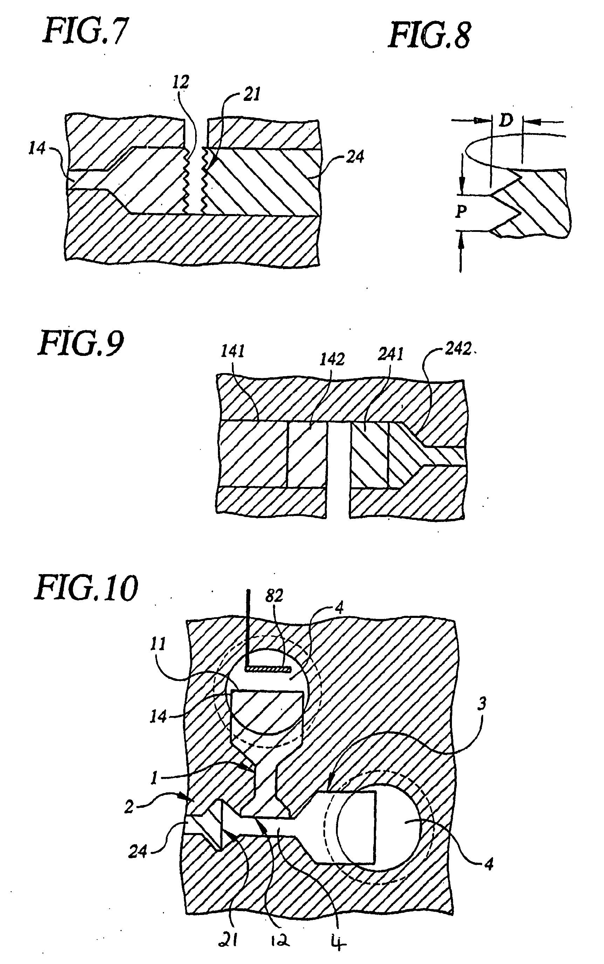

In Figures 7 and 8, each of the terminal portions 12 and 21 is provided by a porous material 14,24 whose exposed face it is serrated. As illustrated in Figure 8, the serrations have a pitch P and depth D which are preferably such that the aspect ratio of the serrations (D/P) is as defined above.

In Figure 9, the terminal portions 12 and 21 are provided by a first porous material 142,241, having a first charge ratio and the remainder of the EOF element is provided by a second porous material 141,242 having a second charge ratio related to the first charge ratio in the way defined above.

In Figure 10, the EOF elements 1,2 and 3 are positioned so that the exposed face of the terminal portion 12 of EOF element 1 is swept tangentially by liquid flowing between the EOF element 2 and the passive flow element 3.

## System Configurations

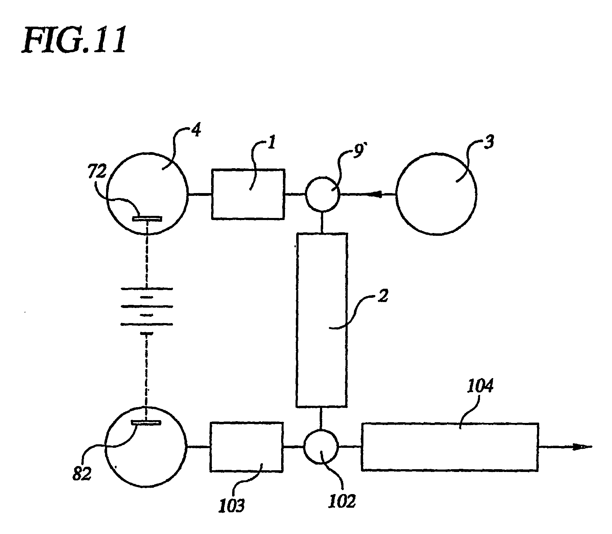

EOF systems can have a great variety of configurations, including two or more series systems connected to each other in parallel, optionally with a common electrical ground. The systems can, for example, include two bridge elements, one connected to each of two electrode-containing reservoirs, and one or more EOF elements connected in series with and between the bridge elements. The systems can also include one or more passive elements which do not carry current but through which liquid flows, either from or into a reservoir. For example, Figure 11, shows a system similar to that shown in Figure 1, but additionally containing a third EOF element 101 and junction 102 Interposed between the EOF element 2 and the reservoir containing electrode 82, and a fourth passive flow element 104.

## General Design Considerations

Preferred embodiments of the present invention may have one or more of the following characteristics.

1. Use of singly valent counterions (ions with a sign opposite that of the zeta potential) for a well defined hence well-behaved zeta potential.

2. Use of pumping or transport or working liquid which does not contain compounds that degrade or eliminate the zeta potential.

3. Use of the lowest concentration of ionic species compatible with 'minimal' double layer overlap (i.e. a concentration yielding a liquid Debye length which is less than about one-fifth the dynamic pore scale).

4. Use of the lowest concentration of buffering ionic species consistent with establishing and maintaining the pH of the pumping or transport liquid.

5. Use of ionic species which are compatible with, well soluble, and well ' dissociated in the pumping or transport or working liquid.

6. A pore size distribution which is preferably monodisperse and which, if polydisperse, does not contain occasional large pores or defects (e.g. cracks or voids) and contains no or a minimal number of substantially smaller pores.

7. Use of a porous dielectric material which is less conductive than the pumping or transport or transport liquid including any additives.

8. Use of a porous dielectric material with a dielectric strength sufficient to withstand the potentials applied without dielectric breakdown.

9. Use of a porous dielectric material which is mechanically strong enough to withstand the pressures applied or generated both as regards the ability to withstand compression and collapse, and the ability to remain attached to the material of the bounding channel or conduit.

10. Use of a porous dielectric material which is chemically resistant and insoluble in the pumping or transport or working liquid including any additives.

11. Use of a channel or conduit material that is an insulator, and in particular the material should be less conducting than the pumping or transport or working liquid including any additives.

12. Use of a channel or conduit material with a dielectric strength sufficient to withstand the potentials applied without dielectric breakdown.

13. Use of a channel or conduit material which is mechanically strong enough and thick enough to withstand the pressures applied or generated.

14. Use'of a channel or conduit material which is chemically resistant and insoluble in the pumping or transport or working liquid including any additives.

15. Use of a pumping or transport or working liquid with a high value of the dielectric permittivity and a low value of the dynamic viscosity.

16. Use of a combination of pumping or transport or working liquid, surface chemistry and additive ionic species chemistry that provides a high value of the zeta potential.

17. Use of a pumping or transport or working liquid that is a pure liquid or a highly miscible mixture of pure liquids.

Other design considerations include selection of the material, pore size and geometry of a bridge or other EOF element so as to about equally minimize:

1. The fraction of the total flowrate that is carried as pressure-driven flow through the elements. Preferably some finite flow is provided to control the thickness of diffusion layers.

2. The fraction of the total flow that is carried as electroosmotically-driven flow through the elements. Preferably some finite flow is provided to control the thickness of diffusion layers.

3. The fraction of the total potential applied that appears across the elements.

Those skilled in the art will have no difficulty, having regard to their own knowledge and the disclosure in this specification, it developing procedures to promote these goals through the selection of suitable materials and dimensions. The highway of example, in a system such as that shown in Figure 11, use can be made of the following equation for the rates of flow Q through the element 104.

$$Q = Q_{pf}(1-cs)/[(1+2as)(1+b/a(1+K))]$$

wherein $a = g_2/g_3$, $b = M_3\Lambda^2_3/M_2\Lambda^2_2$, $c = v_3/v_2$, $K = k_4/k_2$ and $s = \sigma_2/\sigma_4$ where $\sigma$ is an effective liquid conductivity (the bulk liquid conductivity increased by any charge layer of effects). The quantity $K$ is the 'load' factor and is the ratio of pressure-driven flow conductance of the fourth element to that of the second element. K takes values ranging from zero for operation under high backpressure, to values much greater than unity for flow into a low backpressure load. The numerator in this equation gives the loss due to electroosmotic flow through the third element; the first term in the denominator gives the loss due to voltage drops across the first and third elements; and the latter term in the denominator gives the loss due to pressure-driven flow through the third element. These losses are phenomenologically related and, therefore, in general actions taken to reduce one of these losses may alter other losses. For example, making the geometry factor, $g$, of the first and third elements large compared to that of the second element yields a small value of $a$. This makes the effect of voltage drop in the first and third elements smaller, but amplifies the effect of pressure-driven loss through the third element.

Thus, one possible procedure, for cases with a load factor (K) of about 1, is to approach the design issues in terms of the transport liquid type and composition, target ideal pressure and flowrate. These yield specifications for the pumping element material, physical geometry and porous media properties. Then referring to equation above

1. Select some small number $\delta$, where the fraction of flowrate performance will be better than about $1-3\delta$.
2. The ratio $\Lambda_{1,3}/\Lambda_2$ is selected less than $\varepsilon\sqrt{(1+K)}$
3. The value of $\zeta_{1,3}$ is selected to make the value of $\zeta_{1,3}\sigma_{1,3}/\zeta_2\sigma_2$ about $\delta$.
4. The value of $\Lambda_{1,3}$ is refined, still consistent with step (2) and that may also require a new attendant value of $\zeta_{1,3}$ to satisfy step (3), that provides a minimal and preferably negligibly small difference in displacement fluxes through the system (i.e. minimize the value of $R_2-R_{1,3}$). A range of solutions may be found, and a solution selected based on the materials available.
5. The geometry ratio $g_2/g_{1,3}$ is selected to be about $\delta$.

Another possible procedure, for cases with large values of the load factor (K), involves the following steps.

1. Select some small number $\varepsilon$, where the flowrate performance will then be better than about $1-3\varepsilon$.
2. The ratio $\Lambda_{1,3}/\Lambda_2$ is selected less than unity.
3. The value of $\zeta_{1,3}$ is selected to make the value of $\zeta_{1,3}\sigma_{1,3}/\zeta_2\sigma_2$ about $\delta$.
4. The value of $\Lambda_{1,3}$ is refined, still consistent with step (2) and that may also require a new attendant value of $\zeta_{1,3}$ to satisfy step (3), that provides a minimal and preferably negligibly small difference in displacement fluxes through the system (i.e. minimize the value of $R_2-R_{1,3}$). A range of solutions may be found, and a solution selected based on the materials available.
5. The geometry ratio $g_2/g_{1,3}$ is selected to be less than c, and preferably as small as practical.

The extent to which mismatching of the EOF elements can be tolerated (i.e. the maximum permissible magnitude of the difference between the flux ratios and/or charge ratios) is in some cases related to the acceptable tolerance of the system to variation in the composition of the working liquid. For example, if a 4% change in the composition was acceptable, then matching the flux ratios within 2 % might be sufficient.

**Claims**

**1.**    A novel electroosmotic flow system comprising

(A) a first electroosmotic flow (EOF) element having a first terminal portion A1 and a second terminal portion A2,
(B) a second EOF element having a first terminal portion B1 and a second terminal portion B2,
(C) a junction at which the second terminal portion A2 and the first terminal portion B1 terminate, whereby the first and second EOF elements are in electrical and liquid communication;
the system having at least one of the following characteristics

(i) the magnitude of the difference between the flux ratio of the first EOF element and the flux ratio of the second EOF element is less than 0.5;
(ii) the magnitude of the charge ratio of at least one of the first and second EOF elements is greater than 0.01;
(iii) the liquid in one of the first and second EOF elements has a first flow rate and the liquid in the other EOF element has a second flow rate, and the first flow rate is less than 10% of the second flow rate;
(iv) there is a first voltage drop across one of first and second EOF elements and a second voltage drop across the other EOF element, and the first voltage drop is substantially less than the second voltage drop;
(v) the distance between the terminal portion A2 and the terminal portion B1 is less than the largest dimension of at least one of the terminal portion A2 and the terminal portion B1;
(vi) the mean flow streamline through the junction has a substantial component which is tangential to at least one of the terminal portions A2 and B1;
(vii) in at least one of the first and second EOF elements, the current flux through at least one of the first and second terminal portions is substantially less than the maximum current flux between the first and second terminal portions;
(viii) at least one of the terminal portions A2 and B1 has a surface area in contact with the junction liquid which is substantially greater than the effective cross-section area of the EOF element;
(ix) at least one of the terminal portions A2 and B1 has a surface area in contact with the junction liquid which is at least 2 times the smallest cross-sectional area of the element;
(x) at least one of the terminal portions A2 and B1 comprises serrations in contact with the junction liquid;

(xi) at least one of the first and second terminal portions of at least one of the first and second EOF elements is composed of a first material having a first charge ratio and at least part of the remainder of the EOF element is composed of a second material having a second charge ratio.

2. Apparatus suitable for use in an electroosmotic flow system, the apparatus comprising

(A) a first electroosmotic flow (EOF) element having a first terminal portion A1 and a second terminal portion A2,
(B) a second EOF element having a first terminal portion B1 and a second terminal portion B2, and
(C) a junction at which the second terminal portion A2 and the first terminal portion B1 terminate;

the apparatus being such that, if it is made part of an electroosmotic flow test system which is operating under substantially steady-state conditions at 22°C and which consists essentially of

(a) the first electroosmotic flow (EOF) element,
(b) a first reservoir which is connected to the first terminal portion A1 of the first EOF element,
(c) a first electrode in the first reservoir,
(d) a second reservoir which is connected to the second terminal portion B2 of the second EOF element,
(e) a second electrode in the second reservoir,
(f) a source of electrical power connected to the first and second electrodes, and
(g) an aqueous solution which fills the system and which is selected from the test solutions listed herein,

the test system has at least one of the following characterics

(i) the magnitude of the difference between the flux ratio of the first EOF element and the flux ratio of the second EOF element is less than 0.5;
(ii) the magnitude of the charge ratio of at least one of the first and second EOF elements is greater than 0.01;
(iii) the liquid in one of the first and second EOF filaments has a first flow rate and the liquid in the other EOF element has a second flow rate, and first flow rate is less than 10% of the second flow rate, for example a zero flow rate;
(iv) there is a first voltage drop across one of the first and second EOF elements and a second voltage drop across the other EOF element, and the first voltage drop is substantially less than the second voltage drop;
(v) the distance between the terminal portion A2 and the terminal portion B1 is less than the largest dimension of at least one of the terminal portion A2 and the terminal portion B1;
(vi) the mean flow streamline through the junction has a substantial component which is tangential to at least one of the terminal portions A2 and B1;
(vii) in at least one of the first and second EOF element, the current flux through at least one of the first and second terminal portions is substantially less than the maximum current flux between the first and second terminal portions;
(viii) at least one of the terminal portions A2 and B1 has an exposed surface area in contact with the junction liquid which is substantially greater than the effective cross-section area of the EOF element of which it is a part;
(ix) at least one of the terminal portions A2 and B1 comprises serrations; and
(x) at least one of the terminal portions of at least one of the first and second EOF elements is composed of a first material having a first charge ratio and at least part of the remainder of the EOF element of which it is part is composed the second material having a second charge ratio.

*FIG.1*

*FIG.2*

*FIG.3*

## FIG.4

## FIG.5

## FIG.6

## FIG.7

## FIG.8

## FIG.9

## FIG.10

## FIG.11

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3923426 A, Theeuwes
- CN 97212126
- US 6012902 A, Parce
- WO 9916162 A, Parce
- US 5573651 A, Dasgupta
- US 942884 A

**Non-patent literature cited in the description**

- **B.S.SEOUL ; U. KANSAS.** *Electrochemical detection for capillary electrophoresis,* 1996, 136-141
- **DESIDERIO.** *Electrophoresis,* 1999, vol. 20, 525-528
- *Micro Total Analysis Systems 2000,* 2000
- **RAMSEY.** MICRO TOTAL ANALYSIS SYSTEMS 2000. 213-216
- **PAUL.** MICRO TOTAL ANALYSIS SYSTEMS 2000. 583-590
- **WALLENBORG.** MICRO TOTAL ANALYSIS SYSTEMS 2000. 355-358
- **GAN.** *Talanta,* 2000, vol. 51, 667-675
- **ANDERSON.** *Chem. Eng. Commun.,* 1985, vol. 38, 93-106
- **KOBATAKE.** *J. Chem. Phys.,* 1964, vol. 40, 2212-2222
- **PHILIPSE.** *J. Mat. Sci. Lett.,* 1989, vol. 8, 1371-1373
- **WIJNHOVEN et al.** *Science,* 1998, vol. 281, 802-804
- **T. YAZAWA.** *Key Engineering Materials,* 1996, vol. 115, 125-146
- **MA et al.** *Microporous and Mesoporous Materials,* 2000, vol. 37, 243-252
- **NAKANISHI et al.** *J. Non-crystalline Solids,* 1992, vol. 139, 1-13
- **PETERS et al.** *Anal. Chem.,* 1997, vol. 69, 3646-3649
- **DROTT et al.** *J. Micromech. Microeng.,* 1997, vol. 7, 14-23
- **JESSENSKY et al.** *J. Electrochem. Soc.,* 1998, vol. 145, 3735-3740